# EUROPÄISCHE PATENTSCHRIFT

(11) **EP 2 110 046 B1**
(45) Veröffentlichungstag und Bekanntmachung des Hinweises auf die Patenterteilung: **23.03.2011**
(21) Anmeldenummer: 09005148.3
(22) Anmeldetag: 08.04.2009
(51) Int. Cl.: A47B 47/02

(54) **Regal und Verfahren zur Befestigung eines Regalbodens**
Shelf and method for fixing a shelf
Etagère et procédé destiné à la fixation d'une étagère

(30) Priorität: 17.04.2008 DE 102008019442; 26.11.2008 DE 102008059066
(43) Veröffentlichungstag der Anmeldung: 21.10.2009
(73) Patentinhaber: HUPFER Metallwerke GmbH & Co. KG, 48653 Coesfeld (DE)
(72) Erfinder: Flück, Egbert, 46348 Raesfeld (DE)
(74) Vertreter: Albrecht, Rainer Harald

(56) Entgegenhaltungen:
- US-A- 5 002 247
- US-B1- 6 848 659

## Beschreibung

Die Erfindung betrifft ein Regal mit vertikal angeordneten Metall-Profilen und mindestens einem Regalboden aus Blech, der an den Längsseiten nach unten orientierte Abkantungen aufweist. Bei dem Regal kann es sich insbesondere um einen Servierwagen handeln.

Offene Regale zur Lagerung bzw. Aufbewahrung von Waren sind hinlänglich bekannt. Solche Regale sind aus US 6 848 659 B1 bekannt. Gleiches gilt für kleinere, fahrbare Regale, die beispielsweise in Großküchen oder im medizinischen Bereich eingesetzt werden und als Servierwagen oder Regattransportwagen bezeichnet werden. Insbesondere im medizinischen Bereich oder in Großküchen werden die Gestelle und die Böden solcher Wagen zumeist vollständig aus Metall hergestellt, da Metall-Wagen nicht nur stabil sind, sondern sich gut reinigen und sterilisieren lassen.

Der Aufbau eines Regaltransportwagens besteht aus mindestens vier vertikal angeordneten Stützelementen, an denen zumeist mehrere Regalböden, auch Servierwagenborde genannt, als horizontale Ablagefläche befestigt sind. Sowohl die Borde als auch die Stützelemente sind in der Regel zur Verbesserung des optischen Aussehens des Wagens geschliffen oder poliert. Die Befestigung der Borde erfolgt überwiegend dadurch, dass die Borde von außen an den vertikalen Stützelementen durch ein Wolfram-Inertgas-Schweißverfahren (WIG) angeschweißt werden. Des Weiteren ist bekannt die Borde durch Verschrauben zu befestigen. Durch die äußere Schweißnahtlage erfahren die Metall-Komponenten in der Umgebung einer Schweißnaht sichtbare Veränderungen, d. h. die metallischen Oberflächen laufen an oder verändem ihre Oberflächenbeschaffenheit. Zur Wiederherstellung eines optisch einwandfreien Gesamteindrucks bedarf es daher einer Nachbehandlung der Oberflächen im Bereich der Schweißnähte. Beim Verschweißen der Nähte von außen werden die Anlauffarben durch Polieren, Beizen und Bürsten entfernt, um außen werden die Anlauffarben durch Polieren, Beizen und Bürsten entfernt, um einen optisch sauberen Eindruck zu schaffen, der wiederum das Schliffbild der Flächen im Sichtbereich stört.

Zur Vermeidung einer Oberflächenveränderung durch Schweißverbindungen bedient man sich in der Praxis einer so genannten Formierung. Dabei wird der Teil des zu schweißenden Werkstücks, der der Schweißnaht bzw. der Schweißelektrode abgewandt ist, mit einem Formiergas behandelt Das Formiergas kann ein Mischgas aus Argon und Stickstoff mit Wasserstoffanteilen sein, oder ein Schutzgas, welches aus dem Schweißbrenner abgezweigt wird. Dort, wo das Werkstück durch diese Formiergasatmosphäre geschützt ist, werden Oberflächenveränderungen wie beispielsweise Anlaufen oder Oxidieren stark reduziert oder vollständig vermieden.

Im Zusammenhang mit den Regaltransportwagen war aufgrund der Schweißnahtlage an den äußeren Kanten der Regalborde bisher eine Formierung mittels Mischgas nur schwer möglich, wodurch ein Anlaufen durch das Schweißen in der Regel in Kauf genommen werden musste. Dadurch war bisher eine Nachbearbeitung der Oberfläche im Bereich der Schweißnaht erforderlich.

Der Erfindung liegt vor diesem Hintergrund die Aufgabe zugrunde, ein Regal anzugeben, bei dem der Regalboden so befestigt ist, dass eine Nachbearbeitung der sichtbaren Oberfläche nicht erforderlich ist.

Die Aufgabe wird dadurch gelöst, dass der Regalboden an seinen Ecken Ausklinkungen aufweist, deren Form dem Querschnitt der vertikalen Metall-Profile entspricht, und dass jede Abkantung in Richtung ihrer Unterseite doppellagig gefalzt ist, so dass ein Schenkel der Falz bezogen auf die Abkantung innenseitig ist. Erfindungsgemäß sind darüber hinaus die innenseitig angeordneten Schenkel mit den vertikalen Metall-Profilen stoffschlüssig verbunden. Zu diesem Zweck weist der innenseitig angeordnete Schenkel eine Länge auf, die eine ausreichend feste stoffschlüssige Verbindung ermöglicht. Bevorzugt ist dabei der innenseitig angeordnete Schenkel annähernd ebenso so lang wie der außenseitig angeordnete Schenkel. Dabei ist es zweckmäßig, dass die stoffschlüssige Verbindung zwischen den Metall-Profilen und dem Regalboden durch eine Schweiß- oder Lötverbindung, gebildet ist. Dadurch, dass diese Verbindung innenseitig an einer Blechdopplung der Abkantungen angeordnet ist, wird eine Veränderung des Metalls an den von außen sichtbaren Flächen vermieden. Durch die erfindungsgemäße Blechdopplung wird Material geschaffen, das ein Durchweißen und gleichzeitig die Entstehung von Anlauffarben verhindert.

Das erfindungsgemäße Regal ist vorzugsweise so beschaffen, dass der Regalboden und/oder die Metall-Profile aus einem rostfreien Stahl gebildet sind, wobei der Regalboden und/oder die Metall-Profile eine bearbeitete Oberfläche aufweisen. Bei dieser Bearbeitung kann es sich beispielsweise um Polieren oder eine Schlelfbearbeitung handeln, wobei durch das Schliffbild der optische Eindruck des Regals verbessert werden soll. Gerade im Hinblick auf optisch verbesserte Oberflächen erweist sich die Vermeidung von Oberflächenveränderungen in Folge einer Schweiß- oder Lötverbindung als großer Vorteil. Gerade bei polierten oder geschliffenen Flächen würde eine Veränderung der Oberfläche im Bereich der Schweißnaht dem Betrachter des Regals sofort auffallen und als störend empfunden. Insofem wäre eine Nachbearbeitung der Oberfläche, welche durch die Schweiß- oder Lötverbindung verändert wurde, unerlässlich. Der Entfall dieser Nachbearbeitung bei dem erfindungsgemäßen Regal stellt daher im Hinblick auf den Fertigungsaufwand eine deutliche Verbesserung dar.

Die Abkantungen des Regalbodens bestehen zweckmäßig aus einer Umbiegung der Regalbodenkante um einen Winkel von im Wesentlichen 90°. Die rechtwinklige Abkantung der Regalböden verursacht zum einen eine höhere Stabilität und bewirkt zum anderen eine solidere und robustere Optik,

Gemäß einer bevorzugten Ausgestaltung des erfindungsgemäßen Regals ist vorgesehen, dass die gesamte Abkantung oder zumindest ein Schenkel der Abkantung eine zusätzliche Umbiegung aufweist. Diese zusätzliche Umbiegung kann beispielsweise dazu vorgesehen sein die Festigkeit des Regalbodens weiter zu erhöhen und die Optik zu verbessern. Im Rahmen der Erfindung liegt beispielsweise die gesamte Abkantung im Bereich der Falz mit einer weiteren Umbiegung zu versehen, wodurch die Tragfähigkeit des Regalbodens erhöht wird. Bevorzugt ist auch eine Ausgestaltung, bei der das freie Ende des innenseitig angeordneten Schenkels leicht nach außen umgebogen wird, um bei der gefalzten Abkantung ein Eindringen von Schmutz zu vermeiden. Des Weiteren kann sich auch der innenseitig angeordnete Schenkel entlang der gesamten Höhe der Abkantung erstrecken und mit seinem Ende parallel zu der ebenen Oberfläche des Regalbodens umgebogen sein. Im Rahmen der beschriebenen Ausgestaltung kann sich die stoffschlüssige Verbindung über die gesamte Höhe der Abkantung und insbesondere bis zu dem ebenen Bereich des Regalbodens erstrecken.

Gemäß der vorliegenden Erfindung ist vorgesehen, dass im Bereich der Abkantung ein innenseitig angeordneter Schenkel und ein außenseitig angeordneter Schenkel gebildet sind. Das Blech kann dabei ohne Einschränkung zwei- oder mehrfach gefalzt sein. Durch eine mehrfache Falzung kann die Tragkraft des Regalbodens deutlich erhöht werden. Des Weiteren besteht die Möglichkeit eine Schneidkante des Bleches einzurollen, so dass diese bei der Herstellung nicht weiter, beispielsweise durch ein Entgraten, behandelt werden muss.

Gegenstand der Erfindung ist auch ein Verfahren zur Befestigung eines Regalbodens aus Metall an einem metallischen Profil. Bei dem erfindungsgemäßen Verfahren wird der Regalboden aus einem Blechzuschnitt derart geformt, dass er seitliche Abkantungen aufweist, die zumindest doppellagig gefalzt sind, so dass ein Schenkel jeder Falz bezogen auf die Abkantungen innenseitig angeordnet ist.

Außerdem werden bei dem erfindungsgemäßen Verfahren die mit Ausklinkungen versehenen Ecken des Regalbodens an die Kanten der Profile passgenau angelegt und die innenseitig angeordneten Schenkel jeder Falz des Regalbodens werden mit den vertikalen Profilen stoffschlüssig verbunden, so dass der Stoffschluss bezogen auf die Abkantungen des Regalbodens jeweils innenseitig ist. Der Hitzeeintrag durch die stoffschlüssige Verbindung erfolgt bei dem erfindungsgemäßen Verfahren an einer von außen nicht sichtbaren Stelle. Durch Wärmetransport Innerhalb der Blechdopplung sowie durch Konvektion entsteht an den sichtbaren Stellen deutlich weniger Hitze, wodurch eine optische oder chemische Veränderung des Metalls reduziert wird. Soweit erforderlich, kann zur Vermeidung von Oberflächenveränderung gemäß der vorliegenden Erfindung auch die Außenseite der Abkantung im Bereich der Kontaktstellen mit den vertikalen Profilen formiert werden. Die Formierung erfolgt bevorzugt mit Mischgas und kann wegen der guten Zugänglichkeit der Außenseite sehr leicht durchgeführt werden.

Die Oberfläche des Regalbodens und/oder der vertikalen Profile können behandelt werden, bevor die Teile verbunden werden. Eine Oberflächenbehandlung durch beispielsweise Schleifen oder Polieren wirkt hochwertiger und ist außerdem besser zu reinigen. Gerade bei vorbehandelten Oberflächen ist daher eine Reduktion einer optischen oder chemischen Veränderung der Oberfläche besonders sinnvoll, da eine aufwändige Nachbehandlung entfällt. Diese Nachbehandlung würde ohne einen Entfall der Oberflächenveränderung aus einem Polier-, Beiz- oder Bürstprozess bestehen. Mit solchen Prozessen wird aber nie das ursprüngliche Schliff- oder Polierbild erreicht, weswegen die Nachbehandlung relativ aufwändig wird. Vor diesem Hintergrund ist ein Entfall der Nachbehandlung in Folge der Anwendung des erfindungsgemäßen Verfahrens besonders reizvoll.

Gemäß dem erfindungsgemäßen Verfahren erfolgt die stoffschlüssige Verbindung zweckmäßigerweise durch Schweißen. Während gemäß dem Stand der Technik üblicherweise ein Wolfram-Inertgas-Schweißen (WIG) vorgesehen ist, um zumindest nach einer Nachbearbeitung der Oberfläche eine akzeptable Optik zu erreichen, wird gemäß der vorliegenden Erfindung eine innen liegende stoffschlüssige Verbindung erzeugt, die von außen nicht sichtbar ist. Die sichtbare Außenkante verbleibt ungeschweißt und wird so in ihrem optischen Erscheinungsbild nicht beeinträchtigt. Wie zuvor beschrieben kann durch die zumindest doppellagige Ausgestaltung der Abkantung und eine optional vorgesehene Formierung auch ein Anlaufen oder Verzundem der sichtbaren Bereiche verhindert werden. Insgesamt kann im Rahmen der Erfindung erreicht werden, dass das gesamte Erscheinungsbild durch die Schweißmontage nicht beeinträchtigt ist. Aufgrund der innenseitigen Anordnung der Schweißnaht sind an deren Aussehen keine besonders hohen Anforderungen zu stellen, so dass insgesamt eine Vielzahl von Schweißverfahren eingesetzt werden können. Dazu gehören neben dem Wolfram-Inertgasschweißen (WIG) insbesondere Metallschutzgasschweißverfahren (MIG/MAG). Ferner sind leistungsfähige elektronische Schweißverfahren wie z. B das Cold-Metal-Transfer-Schweißen (CMT) und ähnliche Weiterentwicklungen des MIG- und MAG-Schweißens bevorzugt einsetzbar. Während bei Regalen, die in einem Wolfram-Inertgas-Schweißverfahren gefertigt sind, unter Belastung bisweilen ein Reißen an dem Nahtanfang der Schweißnähte beobachtet wird, zeichnen sich MIG/MAG und CMT-Schweißverfahren durch eine höhere Festigkeit der Schweißnähte und eine leichtere Verfahrensführung während des Schweißvorganges aus. Erfahrungsgemäß sind bei diesen Schweißverfahren auch größere Bauteiltoteranzen akzeptabel, wodurch insbesondere eine Automatisierung des Schweißprozesses ermöglicht wird. Insbesondere können diese Verfahren im Vergleich zu dem Wolfram-Inertgasschweißen schneller und in der Regel mit einem geringeren apparativen Aufwand durchgeführt werden.

Das Cold-Metal-Transfer-Schweißen stellt eine besonders vorteilhafte Weiterbildung des Metallschutzgasschweißens (MIG/MAG) dar. Bei dem CMT-Schweißen erfolgt insgesamt eine deutlich reduzierte Hitzeeinwirkung, die durch eine verbesserte Prozessregelung und insbesondere ein Rückziehen des Drahtes bei einem Kurzschluss erreicht wird. Durch das CMT-Schweißverfahren können glattere Schweißnähte erzeugt und die Bildung von Spritzern reduziert werden.

Durch die Formierung werden optische oder chemische Veränderungen weiter reduziert. Im Zusammenhang mit der Blechdopplung wird dabei durch die Schweißposition, die Schweißart und die Formierung die hochwertige Oberfläche im Sichtbereich geschaffen.

Im Folgenden wird die Erfindung anhand einer lediglich ein Ausführungsbeispiel darstellenden Zeichnung erläutert. Die Figuren zeigen schematisch
- **Fig. 1**: einen Ausschnitt eines vertikalen Schnitts durch einen Regalboden,
- **Fig. 2**: einen horizontalen Schnitt durch ein Metallprofil an dem ein Regalboden befestigt ist,
- **Fig. 3**: eine perspektivische Darstellung eines Ausschnitts eines Regals, wobei die Regalbodenoberseite zu sehen ist und
- **Fig. 4, 4a und 4b**: alternative Ausgestaltungen eines Regalbodens in einem vertikalen Schnitt.

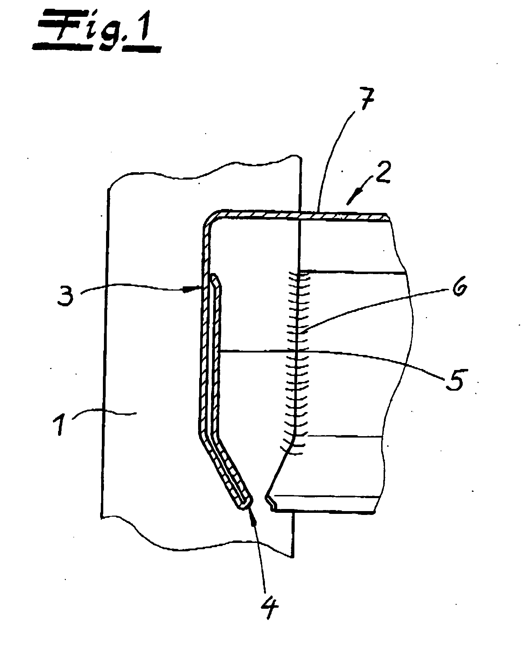

In den Figuren sind verschiedene Ansichten und Details eines Regals abgebildet. Zu sehen ist ein vertikal angeordnetes Metall-Profil 1 und ein Regalboden 2 aus Blech, der an den Längsseiten nach unten orientierte Abkantungen 3 aufweist. An seinen Ecken weist der Regalboden 2 Ausklinkungen auf, deren Form dem Querschnitt der vertikalen Metall-Profile 1 entspricht. Der Fig. 1 ist zu entnehmen, dass die Abkantung 3 in Richtung ihrer Unterseite doppellagig gefalzt ist, so dass ein Schenkel 5 der Falz 4 bezogen auf die Abkantung 3 innenseitig ist. Dabei ist der innenseitig angeordnete Schenkel 5 mit dem vertikalen Metall-Profil 1 stoffschlüssig verbunden. Die Verbindung besteht vorzugsweise aus einer Schweiß- oder Lötverbindung 6. Das freie Ende des innenseitig angeordneten Schenkels 5 ist derart leicht umgebogen, dass es an dem außenseitig angeordneten Schenkel anliegt, wodurch das Eindringen von Verunreinigungen vermieden werden kann. Der Regalboden 2 und/oder die Metall-Profile 1 bestehen vorzugsweise aus einem rostfreien Stahl, wobei der Regalboden 2 und/oder die Metall-Profile 1 eine bearbeitete Oberfläche 7 aufweisen.

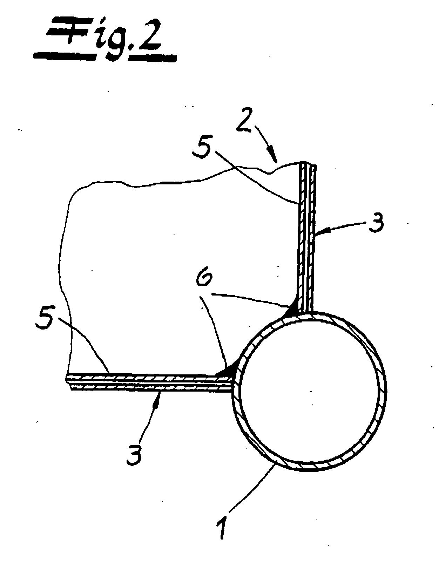

Der Fig. 2 kann ein horizontaler Schnitt durch ein vertikales Metall-Profil 1 entnommen werden, wobei an zwei Stellen eine Schweißnaht 6 zu sehen ist, womit der innenseitige Schenkel 5 der gefalzten Abkantung 3 mit dem Metall-Profil 1 stoffschlüssig verbunden ist. Durch die innenseitige Anordnung der Schweißnaht 6 an dem innenseitig angeordneten Schenkel 5 ist es ohne Schwierigkeiten möglich, sowohl das Metall-Profil 1 als auch die Kante 3 des Regalbodens 2 mit einem Mischgas zu formieren. Die Formierung und die innenseitige Anordnung der Schweißnähte verhindern in Verbindung mit der Metalldopplung im Bereich der Abkantung 3 ein Anlaufen, Verfärben oder eine chemische Veränderung der Oberfläche im sichtbaren Bereich der Verbindung zwischen Regalboden 2 und Metall-Profil 1.

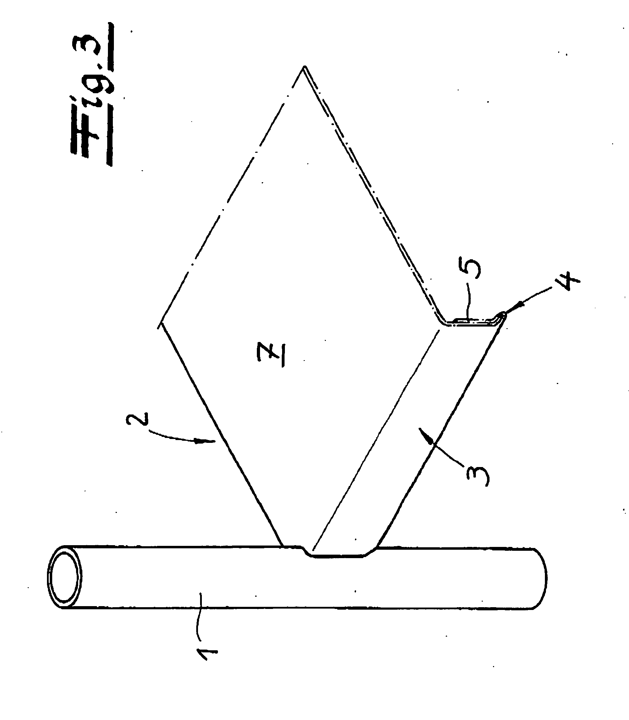

In Fig. 3 ist eine seitliche Darstellung eines Ausschnitts eines Regalbodens bzw. eines Servierwagenbordes dargestellt. An jeder seiner Ecken ist der Regalboden 2 mit einer Ausklinkung versehen, wodurch er passgenau an die Kanten des Profils 1 angelegt werden kann. Der Figur kann auch entnommen werden, dass die Abkantungen 3 des Regalbodens 2 aus einer Umbiegung der Regalbodenkante 3 um einen Winkel von im Wesentlichen 90° besteht. Am Rand des Regalbodenausschnitts ist zu erkennen, dass die seitliche Abkantung 3 doppellagig gefalzt ist, so dass ein Schenkel 5 der Falz 4 bezogen auf die Abkantung 3 innenseitig angeordnet ist. Durch die innenseitige Anordnung der stoffschlüssigen Verbindung 6, welche vorzugsweise eine durch Metallschutzgasschweißen (MIG oder MAG) oder durch CMT-Schweißen gebildete Schweißnaht ist, wird die außenseitige Bildung von Anlauffarben und Schweißdurchdringungen vermieden bzw. weitgehend reduziert. Die Oberflächen kann, falls zusätzlich erforderlich beim Schweißen auf besonders einfache Weise von außen formiert werden. Die Formierung erfolgt vorzugsweise dadurch, dass in der Umgebung der Schweißnähte 6 eine Atmosphäre aus einem Inertgasgemisch erzeugt wird. Zur Schaffung einer insgesamt besseren Optik des Regals bzw, des Servierwagens ist es zweckmäßig, dass die Oberfläche des Regalbodens 2 und/oder der vertikalen Profile 1 bearbeitet wird, bevor die Teile verbunden werden. Diese Bearbeitung kann beispielsweise durch Polieren erfolgen.

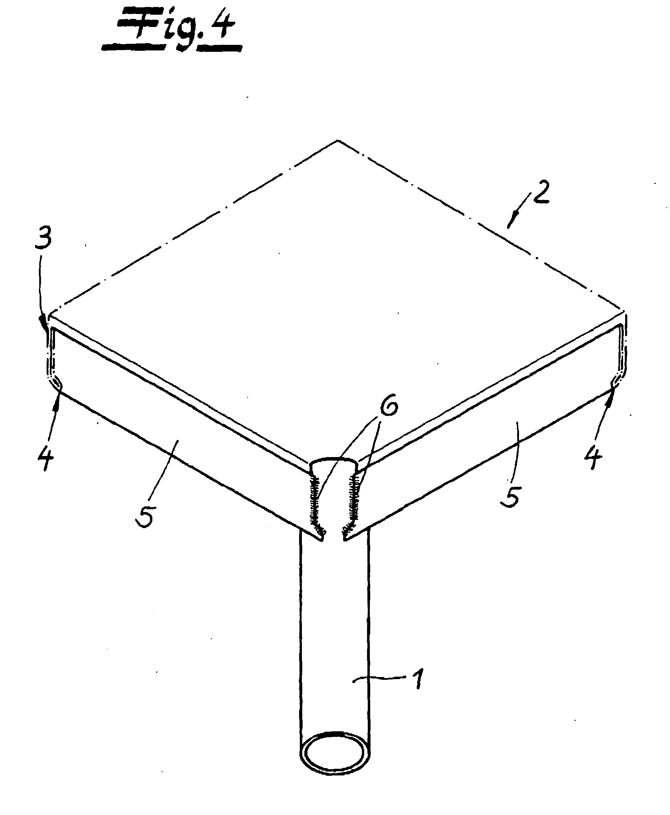

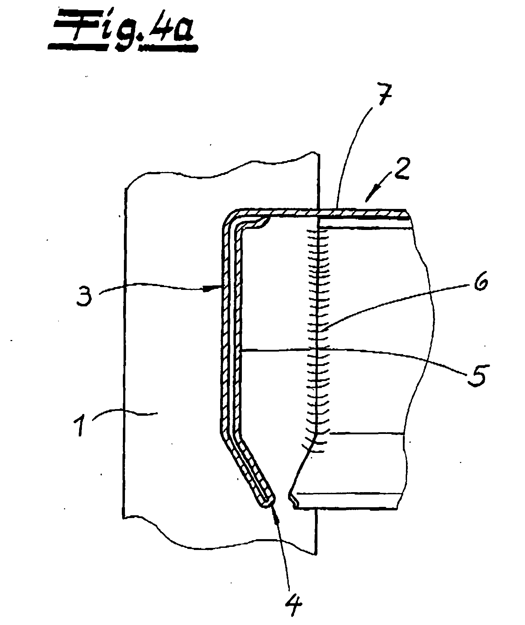

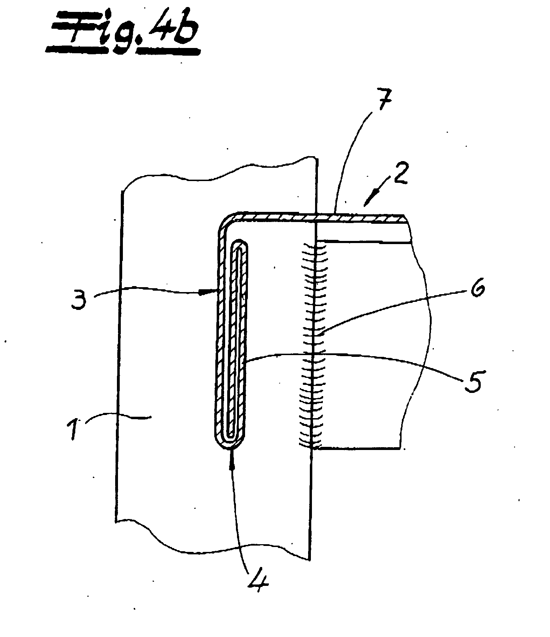

Fig. 4a und 4b zeigen entsprechend der Fig. 1 einen vertikalen Schnitt durch einen Regalboden bei einer alternativen Ausgestaltung des erfindungsgemäßen Regals. Gemäß der Fig. 4a erstreckt sich der innenseitig angeordnete Schenkel 5 über die gesamte Höhe der Abkantung 3, wobei das freie Ende des innenseitig angeordneten Schenkels umgebogen ist und parallel zu der ebenen Fläche des Regalbodens 2 verläuft. Abgesehen von einer zusätzlichen Umbiegung des innenseitig angeordneten Schenkels 5 und des außenseitig angeordneten Schenkels im Bereich der Falz 4 erstreckt sich die durch Schweißen gebildete stoffschlüssige Verbindung 6 über die gesamte Höhe der Abkantung 3 und insbesondere bis zum ebenen Bereich des Regalbodens 2. Durch die in Fig. 4a dargestellte Ausgestaltung wird eine besonders sichere Verbindung des Regalbodens 2 mit dem Metall-Profil 1 erreicht, wobei insbesondere ein Reißen der stoffschlüssigen Verbindung 6 an ihren Enden sicher vermieden werden kann.

Gemäß der Fig. 4b ist die Abkantung 3 dreilagig gefalzt, wobei das Ende des Bleches, aus dem der Regalboden 2 gebildet ist, zwischen dem innenseitig angeordneten Schenkel 5 und dem außenseitig angeordneten Schenkel eingerollt ist. Durch eine drei- oder mehrlagige Faltung kann eine weitere Erhöhung der Festigkeit erreicht werden. Vorzugsweise ist der Schenkel 5 annähernd ebenso lang wie der außenseitige Schenkel 3 und endet beispielsweise einige Millimeter unterhalb der Auflagefläche des Regalbodens 2.

## Patentansprüche

1. Regal mit vertikal angeordneten Metall-Profilen (1) und mindestens einem Regalboden (2) aus Blech, der an den Längsseiten nach unten orientierte Abkantungen (3) aufweist, wobei der Regalboden (2) an seinen Ecken Ausklinkungen aufweist, deren Form dem Querschnitt der vertikalen Metall-Profile (1) entspricht, **dardurch gekenzeichnet, dass** jede Abkantung (3) in Richtung ihrer Unterseite zumindest) doppellagig gefalzt ist, so dass ein Schenkel (5) der Falz (4) bezogen auf die Abkantung (3) innenseitig ist, und dass die innenseitig angeordneten Schenkel (5) mit den vertikalen Metall-Profilen (1) stoffschlüssig verbunden sind.

2. Regal nach Anspruch 1, **dadurch gekennzeichnet, dass** die stoffschlüssige Verbindung (6) zwischen den Metall-Profilen (1) und dem Regalboden (2) durch eine Schweiß- oder Lötverbindung gebildet ist.

3. Regal nach einem der Ansprüche 1 oder 2, **dadurch gekennzeichnet, dass** der Regalboden (2) und/oder die Metall-Profile (1) aus einem rostfreien Stahl gebildet sind, wobei der Regalboden (2) und/oder die Metall-Profile (1) eine bearbeitete Oberfläche (7) aufweisen.

4. Regal nach einem der Ansprüche 1 bis 3, **dadurch gekennzeichnet, dass** die Abkantungen (3) des Regalbodens (2) aus einer Umbiegung der Regalbodenkante um einen Winkel von im Wesentlichen 90° besteht.

5. Regal nach einem der Ansprüche 1 bis 4, **dadurch gekennzeichnet, dass** die Abkantung (3) oder zumindest Schenkel (5) eine zusätzliche Umbiegung aufweist.

6. Verfahren zur Befestigung eines Regalbodens (2) aus Blech an einem metallischen Profil (1 ), insbesondere zur Herstellung eines Regals nach einem der Ansprüche 1 bis 5,
wobei der Regalboden (2) aus einem Blechzuschnitt derart geformt Wird, dass er seitliche Abkantungen (3) aufweist, die zumindest doppellagig gefalzt sind, so dass ein Schenkel (5) jeder Falz (4) bezogen auf die Abkantungen (3) innenseitig angeordnet ist,
wobei die mit Ausklinkungen versehenen Ecken des Regalbodens (2) an die Kanten der Profile (1) passgenau angelegt werden und
wobei der innenseitig angeordnete Schenkel (5) jeder Falz (4) des Regalbodens (2) mit den vertikalen Profilen (1) stoffschlüssig verbunden wird, so dass die stoffschlüssige Verbindung (6) bezogen auf die Abkantungen (3) des Regalbodens (2) jeweils innenseitig ist.

7. Verfahren nach Anspruch 6, **dadurch gekennzeichnet, dass** die Oberfläche des Regalbodens (2) und/oder der vertikalen Profile (1) bearbeitet wird, bevor die Teile verbunden werden.

8. Verfahren nach Anspruch 7, **dadurch gekennzeichnet, dass** die Bearbeitung der Oberfläche durch Polieren erfolgt.

9. Verfahren nach einem der Ansprüche 6 bis 8, **dadurch gekennzeichnet, dass** der Blechzuschnitt im Bereich der Abkantung (3) zusätzlich der Falz (4) mit einer weiteren Umbiegung versehen wird.

10. Verfahren nach einem der Ansprüche 6 bis 9, **dadurch gekennzeichnet, dass** die stoffschlüssige Verbindung (6) durch Schweißen, gebildet wird.

11. Verfahren nach Anspruch 10, **dadurch gekennzeichnet, dass** die stoffschlüssige Verbindung durch Metallschutzgasschweißen (MIG/MAG) oder Cold-Metal-Transfer-Schweißen (CMT) gebildet wird.

12. Verfahren nach einem der Ansprüche 6 bis 11, **dadurch gekennzeichnet, dass** die Außenseite der Abkantung (3) im Bereich der Kontaktstellen mit den vertikalen Profilen (1) an der Oberfläche formiert wird, wobei zum Formieren vorzugsweise ein Mischgas verwendet wird.

## Claims

1. A shelf unit having vertically arranged metal profiles (1) and at least one shelf (2) made of sheet metal which shelf (2) has downwardly oriented bent portions (3) at the longitudinal sides, wherein the shelf (2) has notches at its corners, the shape of which notches corresponds to the cross-section of the vertical metal profiles (1), **characterized in that** each bent portion (3) is folded towards its lower side in at least two layers so that one web (5) of the fold (4) is on the inside with respect to the bent portion (3) and that the webs (5) arranged on the inside are materially bonded to the vertical metal profiles (1).

2. The shelf unit according to claim 1, **characterized in that** the material bond (6) between the metal profiles (1) and the shelf (2) is formed by a welded or soldered joint.

3. The shelf unit according to any one of the claims 1 or 2, **characterized in that** the shelf (2) and/or the metal profiles (1) are formed from stainless steel, wherein the shelf (2) and/or the metal profiles (1) have a machined surface (7).

4. The shelf unit according to any one of the claims 1 to 3, **characterized in that** the bent portions (3) of the shelf (2) consist of a bend of the shelf edge with an angle of substantially 90°.

5. The shelf unit according to any one of the claims 1 to 4, **characterized in that** the bent portion (3) or at least the web (5) has an additional bend.

6. A method for fixing a shelf (2) made of sheet metal to a metal profile (1), in particular for manufacturing a shelf unit according to any one of the claims 1 to 5,
wherein the shelf (2) is formed from a sheet metal blank in such a manner that the shelf (2) has lateral bent portions (3) which are folded in at least two layers so that one web (5) of each fold (4) is arranged on the inside with respect to the bent portions (3),
wherein the shelf's (2) corners provided with notches are attached to the edges of the profiles (1) in a precisely fitting manner, and
wherein the web (5) arranged on the inside of each fold (4) of the shelf (2) is materially bonded to the vertical profiles (1) so that the material bond (6) is in each case on the inside with respect to the bent portions (3) of the shelf (2).

7. The method according to claim 6, **characterized in that** the surface of the shelf (2) and/or the vertical profiles (1) is machined prior to joining the parts.

8. The method according to claim 7, **characterized in that** the machining of the surface is carried out by polishing.

9. The method according to any one of the claims 6 to 8, **characterized in that** the sheet metal blank is provided in the region of the bent portion (3) with a further bend in addition to fold (4).

10. The method according to any one of the claims 6 to 9, **characterized in that** the material bond (6) is formed by welding.

11. The method according to claim 10, **characterized in that** the material bond (6) is formed by gas shielded metal welding (MIG/MAG) or cold metal transfer welding (CMT).

12. The method according to any one of the claims 6 to 11, **characterized in that** the outside of the bent portion (3) is treated with forming gas in the region of the contact point with the vertical profiles (1), wherein preferably a mixed gas is used.

## Revendications

1. Rayonnage, avec des profilés métalliques (1) disposés à la verticale et au moins un fond de rayonnage (2) en tôle, qui sur ses côtés longitudinaux comporte des chanfreins (3) dirigés vers le bas, le fond de rayonnage (2) comportant sur ses angles des encoches, dont la forme correspond à la section transversale des profils métalliques (1) **caractérisé en ce que** chaque chanfrein (3) est replié au moins en double épaisseur en direction de sa face inférieure, de telle sorte qu'une branche (5) de la pliure (4) soit intérieure par rapport au chanfrein (3) et que la branche (5) située à l'intérieur soit reliée par matière avec les profilés métalliques (1) verticaux.

2. Rayonnage selon la revendication 1, **caractérisé en ce que** la liaison par matière (6) entre les profilés métalliques (1) et le fond de rayonnage (2) est créée par un assemblage par soudure ou un assemblage par brasage.

3. Rayonnage selon l'une quelconque des revendications 1 ou 2, **caractérisé en ce que** le fond de rayonnage (2) et/ou les profilés métalliques (1) sont en acier inoxydable, le fond de rayonnage (2) et/ou les profilés métalliques (1) comportant une surface usinée (7).

4. Rayonnage selon l'une quelconque des revendications 1 à 3, **caractérisé en ce que** les chanfreins (3) du fond de rayonnage (2) consistent dans un cintrage de l'arête du fond de rayonnage d'un angle de sensiblement 90°.

5. Rayonnage selon l'une quelconque des revendications 1 à 4, **caractérisé en ce que** le chanfrein (3) ou au moins la branche (5) comporte un cintrage supplémentaire.

6. Procédé de fixation d'un fond de rayonnage (2) en tôle sur un profilé métallique (1), notamment pour fabriquer un rayonnage selon l'une quelconque des revendications 1 à 5,
le fond de rayonnage (2) étant conformé à partir d'une découpe de tôle, de sorte à comporter des chanfreins (3) latéraux qui sont pliés au moins en double épaisseur, de telle sorte qu'une branche (5) de la pliure (4) soit intérieure par rapport aux chanfreins (3),
les angles des fond de rayonnages (2) munis d'encoches étant appliqués de façon ajustée sur les arêtes des profilés (1) et
les branches (5) disposées à l'intérieur de chaque pliure (4) du fond de rayonnage (2) étant ainsi reliées par matière avec les profilés (1) verticaux, de telle sorte que la liaison par matière (6) soit chaque fois intérieure, par rapport aux chanfreins (3) du fond de rayonnage (2).

7. Procédé selon la revendication 6, **caractérisé en ce qu'**on usine la surface fond de rayonnage (2) et/ou des profilés (1) verticaux avant de relier les pièces.

8. Procédé selon la revendication 7, **caractérisé en ce que** l'usinage de la surface s'effectue par polissage.

9. Procédé selon l'une quelconque des revendications 6 à 8, **caractérisé en ce qu'**en supplément de la pliure (4), on munit la découpe de tôle d'un cintrage supplémentaire dans la zone du chanfrein (3).

10. Procédé selon l'une quelconque des revendications 6 à 9, **caractérisé en ce que** qu'on créé la liaison par matière (6) par soudage.

11. Procédé selon la revendication 10, **caractérisé en ce que** qu'on créé la liaison par matière par soudage à l'arc sous protection gazeuse avec métal d'apport (MIG/MAG) ou par soudage par Cold Metal Transfer (CMT).

12. Procédé selon l'une quelconque des revendications 6 à 11, **caractérisé en ce que** qu'on traite la face extérieure du chanfrein (3) dans la zone des points de contact avec les profilés (1) verticaux avec un gaz protecteur sur la surface, un gaz mixte étant utilisé de préférence.
